# EUROPÄISCHE PATENTSCHRIFT

(11) **EP 2 237 874 B1**
(45) Veröffentlichungstag und Bekanntmachung des Hinweises auf die Patenterteilung: **30.05.2012**
(21) Anmeldenummer: 09702437.6
(22) Anmeldetag: 13.01.2009
(51) Int. Cl.: B01J 13/14, C11D 3/37, C11D 3/50

(54) **DUFTSTOFFENTHALTENDE MIKROKAPSELN MIT VERBESSERTEM FREISETZUNGSVERHALTEN**
FRAGRANCE-CONTAINING MICROCAPSULES WITH IMPROVED RELEASE PROPERTIES
MICROCAPSULES CONTENANT UN PARFUM ET À COMPORTEMENT DE LIBÉRATION AMÉLIORÉ

(30) Priorität: 15.01.2008 EP 08100495
(43) Veröffentlichungstag der Anmeldung: 13.10.2010
(73) Patentinhaber: BASF SE, 67056 Ludwigshafen (DE)
(72) Erfinder: HENTZE, Hans-Peter, FI-02160 Espoo (FI); JUNG, Marc Rudolf, 67551 Worms (DE); KOPLIN, Tobias Joachim, 67063 Ludwigshafen (DE); DETERING, Jürgen, 67117 Limburgerhof (DE)
(86) Internationale Anmeldenummer: PCT/EP2009/050319
(87) Internationale Veröffentlichungsnummer: WO 2009/090169

(56) Entgegenhaltungen:
- WO-A-02/02222
- WO-A-02/09663
- US-A1- 2006 263 519

## Beschreibung

Die vorliegende Erfindung betrifft Mikrokapseln, Mikrokapselzubereitungen sowie diese enthaltende Mischungen, insbesondere Wasch- und Reinigungsmittel, wobei die Mikrokapseln in ihrem Kern einen oder mehrere Duft- oder Riechstoff(e) enthalten, dessen/deren Freisetzungsverhalten aus dem Kern der Mikrokapsel durch die Verwendung von mehr als einem Vernetzer deutlich verlangsamt ist.

Die meisten Wasch- und Reinigungsmittelzusammensetzungen enthalten Duft- oder Riechstoffe, um den Zusammensetzungen selbst oder den damit behandelten Textilien oder Oberflächen einen angenehmen Duft zu verleihen. Bei den Duft- oder Riechstoffen handelt es sich meist um Verbindungen mit mehreren konjugierten Doppelbindungen, die gegenüber verschiedenen Chemikalien oder Oxidation mehr oder weniger empfindlich sind. Es kann daher zu unerwünschten Wechselwirkungen mit anderen Inhaltsstoffen der Wasch- oder Reinigungsmittel, wie z. B. Tensiden oder Bleichmitteln, kommen, wodurch der Duft- oder Riechstoff zersetzt und/oder die Geruchsnote verändert wird. Ein weiteres Problem stellt die bisweilen hohe Flüchtigkeit der Duft- oder Riechstoffe dar, die dazu führt, dass sich ein Großteil der ursprünglich dem Wasch- oder Reinigungsmittel beigemischten Duft- oder Riechstoffmenge bereits vor dem Zeitpunkt der Verwendung verflüchtigt hat. Zur Überwindung der angesprochenen Probleme ist bereits vorgeschlagen worden, die Duft- oder Riechstoffe in mikroverkapselter Form in die Wasch- oder Reinigungsmittel einzuarbeiten. Derartige Mikrokapseln sind bereits beschrieben worden:

WO 01/49817 (BASF) beschreibt Mikrokapselzubereitungen, enthaltend Mikrokapseln mit einem Kern aus einem hydrophoben Material, das mindestens einen Duft- oder Riechstoff umfasst und einer Schale, die erhältlich ist durch radikalische Polymerisation von ethylenisch ungesättigten Monomeren, die umfassen: 30 bis 100 Massen% eines oder mehrer C₁-C₂₄ Alkylester der Acryl- und/oder Methacrylsäure, 0 bis 70 Massen% eines bi- oder polyfunktionellen Monomeren, 0 bis 40 Massen% sonstiger Monomeren, sowie Wasch und Reinigungsmittelzusammensetzungen, die diese Mikrokapseln enthalten.

WO 05/105291 (Ciba) beschreibt u. a. Duft- und Riechstoff enthaltende Mikrokapseln, deren Schale durch radikalische Polymerisation einer Mischung aus 10 bis 75 % wasserlöslichen vinylischen Monomeren, 10 bis 75 eines di- oder polyfunktionalen vinylischen Monomeren und 10 bis 50 % aus weiteren vinylischen Monomeren aufgebaut wird.

In der WO 93/02144 (BASF) werden Mikrokapseln mit einem hydrophoben Kern beschrieben, der einen Duft- oder Riechstoff umfasst. Dabei wird die Schale durch radikalische Polymerisation von min. 1 Massen% ionogener Monomere und/oder mehrfach ethylenisch ungesättigter Monomere erhalten, wobei mindestens eine der Bindungen basisch oder sauer hydrolisierbar ist.

US 4,798,691 (Japan Synthetic Rubber) offenbart ebenso Mikrokapseln, die einen hydrophoben Kern aufweisen können und eine Schale aufweisen, die durch ein Gemisch aus Monomer und einem vernetzbaren Monomer erhältlich ist.

All diese Mikrokapseln haben allerdings den Nachteil, dass ihre Schalen entweder zu durchlässig für die Duft- oder Riechstoffe sind oder, dass die Schalen so stabil sind, dass der Duft- oder Riechstoff bei normaler mechanischer Belastung kaum oder gar nicht freigesetzt wird. Der vorliegenden Erfindung liegt daher die Aufgabe zugrunde, Duft- oder Riechstoffe enthaltende Mikrokapseln bereitzustellen, bei denen die mechanische Stabilität der Mikrokapsel und das Rückhaltevermögen der Schale für die im Kern befindlichen Duft- und Riechstoffe so ausgewählt ist, dass ein gegenüber dem Stand der Technik verbessertes Rückhalte- und Freisetzungsvermögen der Duft- und Riechstoffe erreicht wird. Das bedeutet, dass zum einen die Freisetzung der Duft- oder Riechstoffe über einen längeren Zeitraum erfolgen soll und gleichzeitig ein "Burst-Release"-Effekt nach Kapselbruch durch Reibung auch über einen längeren Zeitraum gewährleistet wird.

Diese Aufgabe wird überraschend gelöst durch Mikrokapseln gemäß den Ansprüchen 1 bis 6. Die Chemische Zusammensetzung gemäß den Ansprüchen 7 und 8, die Verwendungen gemäß den Ansprüchen 9 bis 12 sowie die Gegenstände gemäß den Ansprüchen 13 und 14 bilden weitere Gegenstände der vorliegenden Erfindung.

Gegenstand der vorliegenden Erfindung ist eine Mikrokapsel, umfassend einen Kern a), der einen Duft- oder Riechstoff enthält, und eine Schale b), wobei b) erhältlich ist durch Polymerisation von
- einem oder mehreren C₁-C₂₄-Alkylester/n der Acryl- und/oder Methacrylsäure und
- mindestens zwei verschiedenen bi- oder polyfunktionellen Monomeren.

Dabei sind bestimmte Ausführungsformen bevorzugt. So ist eine Mikrokapsel bevorzugt, bei der unabhängig voneinander
- a) mindestens ein hydrophobes Material enthält,
- b) durch radikalische Polymerisation herstellbar ist,
- die Menge an C₁-C₂₄-Alkylester/n der Acryl- und/oder Methacrylsäure in der Mikrokapsel 1 bis 99,99 Massen% beträgt,
- ein C₁-C₁₈-Alkylester/n der Acryl- und/oder Methacrylsäure enthalten ist,
- die Menge der mindestens zwei verschiedenen bi- oder polyfunktionellen Monomeren in der Mikrokapsel 0,01 bis 70 Massen% beträgt,
- zwei, drei, vier oder fünf verschiedene bi- oder polyfunktionelle Monomere enthalten sind,
- die Menge an monofunktionellen Monomeren, welche über zusätzliche nicht vinylische funktionelle Gruppen verfügen, in der Mikrokapsel 0 bis 50 Massen% beträgt, und
- weitere monofunktionelle Monomere, welche über zusätzliche nicht vinylische funktionelle Gruppen verfügen, in einer Menge von 0 bis 40 Massen% in der Mikrokapsel enthalten sind.

Besonders bevorzugt ist eine Mikrokapsel, bei der unabhängig voneinander
- a) aus dem mindestens einen hydrophoben Material und dem mindestens einen Duft- oder Riechstoff besteht oder
   a) aus dem mindestens einen Duft- oder Riechstoff besteht,
- b) durch radikalische Polymerisation hergestellt ist,
- die Menge an C₁-C₂₄-Alkylester/n der Acryl- und/oder Methacrylsäure in der Mikrokapsel 20 bis 80 Massen% beträgt,
- ein C₁-C₁₂-Alkylester der Acryl- und/oder Methacrylsäure enthalten ist,
- die Menge der mindestens zwei verschiedenen bi- oder polyfunktionellen Monomeren in der Mikrokapsel 5 bis 50 Massen% beträgt,
- zwei oder drei verschiedene bi- oder polyfunktionelle Monomere enthält,
- die Menge an monofunktionellen Monomeren, welche über zusätzliche nicht vinylische funktionelle Gruppen verfügen, in der Mikrokapsel 10 bis 40 Massen% beträgt,
   und
- weitere monofunktionelle Monomere, welche über zusätzliche nicht vinylische funktionelle Gruppen verfügen, in einer Menge von 5 bis 35 Massen% in der Mikrokapsel enthalten sind.

Ganz besonders bevorzugt ist eine Mikrokapsel, bei der unabhängig voneinander
- das mindestens eine hydrophobe Material ausgewählt ist aus der Gruppe bestehend aus: Pflanzenöl, tierischem Öl und Mineralöl,
- der mindestens eine Duft- oder Riechstoff ausgewählt ist aus der Gruppe bestehend aus: natürlichen Duft- oder Riechstoffen, synthetischen Duft- oder Riechstoffen und halbsynthetischen Duft- oder Riechstoffen,
- die Menge an C₁-C₂₄-Alkylester/n der Acryl- und/oder Methacrylsäure in der Mikrokapsel 35 bis 60 Massen% beträgt,
- ein C₁-C₆-Alkylester der Acryl- und/oder Methacrylsäure enthalten ist,
- die Menge der mindestens zwei verschiedenen bi- oder polyfunktionellen Monomeren in der Mikrokapsel 20 bis 40 Massen% beträgt,
- zwei verschiedene bi- oder polyfunktionelle Monomere enthält,
- die Menge an monofunktionellen Monomeren, welche über zusätzliche nicht vinylische funktionelle Gruppen verfügen, in der Mikrokapsel 20 bis 30 Massen% beträgt,
   und
- weitere monofunktionelle Monomere, welche über zusätzliche nicht vinylische funktionelle Gruppen verfügen, in einer Menge von 10 bis 30 Massen% in der Mikrokapsel enthalten sind.

Unter C₁-C₂₄-Alkylester/n der Acryl- und/oder Methacrylsäure werden allgemein nicht nur die reinen Alkylester verstanden, sondern auch modifizierte Verbindungen, wie Alkylamide der Acrylsäure oder Vinylalkylether. Nichtabschließende Beispiele sind: tert.-Butylacrylamid und Acrylamid.

Weiter werden unter bi- oder polyfunktionellen Monomeren Stoffe verstanden, die über mehr als eine radikalisch polymerisierbare Gruppe verfügen und so die bei der Polymerisation wachsenden Polymerketten miteinander zu einem dreidimensionalen Netzwerk verbinden können. Dabei können neben den polyfunktionellen Monomeren auch oligomere Vernetzer eingesetzt werden.

Nichtabschließende Beispiele sind: Butandioldiacrylat, Dipropylenglykoldiacrylat, Hexandioldiacrylat, ethoxyliertes Trimethylolpropantriacrylat, Tripropylenglykoldiacrylat, 2,5-Dimethyl-2,5-hexandioldimethacrylat, - dabei sind besonders bevorzugt: Butandioldiacarylat, Penthaeritrittetraacrylat und Penthaeritrittriacrylat.

Zu den hydrophoben Materialien, die als Kernmaterial eingesetzt werden können, zählen alle Arten von Ölen, wie Pflanzenöle, tierische Öle, Mineralöle, Paraffine, Chlorparaffine, Fluorkohlenwasserstoffe und andere synthetische Öle.

Typische und nicht abschließende Beispiele sind Sonnenblumenöl, Rapsöl, Olivenöl, Erdnussöl, Sojaöl, Kerosin, Benzol, Toluol, Butan, Pentan, Hexan, Cyclohexan, Chloroform, Tetrachlorkohlenstoff, chlorierte Diphenyle und Silikonöl. Es können auch hydrophobe Materialien mit hohem Siedepunkt verwendet werden, z. B. Diethylphthalat, Dibutylphthalat, Diisohexylphthalat, Dioctylphthalat, Alkylnaphthalin, Dodecylbenzol, Terphenyl, teilweise hydrierte Terphenyle, Ethylhexyl Palmitate, Capric/Caprylic-Triglyceride, PPG-2 Myristyl Ether Propionate; PPG-5 Ceteth-20; C₁₂₋₁₅-Alkyl-Benzoate, Mineral Oil (CAS: 8042-47-5); Cetearyl Ethylhexanoate; Dimethicone; Polyisobutylene (z. B. BASF: Glisopal ®, Oppanol ®).

Das gegebenenfalls den Duft- oder Riechstoff enthaltende oder daraus bestehende hydrophobe Material wird so gewählt, dass es sich bei Temperaturen zwischen seinem Schmelzpunkt und dem Siedepunkt von Wasser in Wasser emulgieren lässt. Niederviskose hydrophobe Materialien weisen dabei eine Brookfield-Viskosität < 5 Pa*s auf (gemessen bei 23 °C mit einer 5er-Spindel und 20 U/s nach DIN EBN ISO 3219). Unter einem Duft- oder Riechstoff werden alle organischen Substanzen verstanden, die eine gewünschte olfaktorische Eigenschaft aufweisen und im Wesentlichen nicht toxisch sind. Hierzu zählen u. a. alle üblicherweise in Wasch- oder Reinigungsmittelzusammensetzungen oder in der Parfümerie verwendeten Duft- oder Riechstoffe. Es kann sich um Verbindungen natürlichen, halbsynthetischen oder synthetischen Ursprungs handeln. Bevorzugte Duft- oder Riechstoffe können den Substanzklassen der Kohlenwasserstoffe, Aldehyde oder Ester zugeordnet werden. Zu den Duft- oder Riechstoffen zählen auch natürliche Extrakte und/oder Essenzen, die komplexe Gemische von Bestandteilen enthalten können, wie Orangenöl, Zitronenöl, Rosenextrakt, Lavendel, Moschus, Patschuli, Balsamessenz, Sandelholzöl, Pinienöl und Zedernöl.

Nicht einschränkende Beispiele synthetischer und halbsynthetischer Duft- oder Riechstoffe sind : 7-Acetyl-1,2,3,4,5,6,7,8-octahydro-1,1,6,7-tetramethyl-naphthalin, α-Ionon, ss-Ionon, y-Ionon, α-Isomethylionon, Methylcedrylon, Methyldihydrojasmonat, Methyl-1,6,10-trimethyl-2,5,9-cyclododecatrien-1-yl-keton, 7-Acetyl-1,1,3,4,4,6-hexamethyl-tetralin, 4-Acetyl-6-tert-btyl-1,1-dimethyl-indan, Hydroxyphenylbutanon, Benzophenon, Methyl-ss-naphthyl-keton, 6-Acetyl-1,1,2,3,3,5-hexamethyl-indan, 5-Acetyl-3-isopropyl-1,1,2,6-tetramethyl-indan,1-Dodecanal; 4-(4-Hydroxy-4-methylpentyl)-3-cyclohexen-l-carboxaldehyd, 7-Hydroxy-3,7-dimethyloctanal, 10-Undecen-1-al, iso-Hexenyl-cyclohexyl-carboxaldehyd, Formyl-tricyclodecan, Kondensationsprodukte von Hydroxycitronellal und Methylanthranilat, Kondensationsprodukte von Hydroxycitronellal und Indol, Kondensationsprodukte von Phenyl-acetaldehyd und Indol, 2-Methyl-3-(para-tert-butylphenyl)-propionaldehyd, Ethylvanillin, Heliotropin, Hexylzimtaldehyd, Amylzimtaldehyd, 2-Methyl-2-(-iso-propylphenyl)-propionaldehyd, Cumarin, Decalacton-y, Cyclopentadecanolid, 16-Hydroxy-9-hxadecensäure-lacton, 1,3,4,6,7,8-Hexahydro-4,6,6,7,8,8-hexamethylcyclopenta-y-2-benzopyran, ss-Naphthol-methylether, Ambroxan, Dodecahydro-3a,6,6,9a,tetramethyl-naphtho[2,Ib]furan, Cedrol, 5-(2,2,3-Trimethylcyclopent-3-enyl)-3-methylpentan-2-ol, 2-Ethyl-4-(2,2,3-trimethyl-3-cyclopenten-1-yl)-2-buten-1-ol, Caryophyllenalkohol, Tricyclodecenylpropionat, Tricyclodecenylacetat, Benzylsalicylat, Cedrylacetat und tert-Butyl-cyclohexylacetat.

Besonders bevorzugt sind: Hexylzimtaldehyd, 2-Methyl-3-(-tert-butylphenyl)-propionaldehyd, 7-Acetyl-1,2,3,4,5,6,7,8-octahydro-1,1,6,7-tetramethyl-naphthalin, Benzylsalicylat, 7-Acetyl-1,1,3,4,4,6-hexamethyl-tetralin, para-tert-butyl-cyclohexylacetat, Methyldihydro-jasmonat, ss-Naphthol-methylether, Methyl-ss-naphthylketon, 2-Methyl-2-(para-iso-propylphenyl)-propio-aldehyd, 1,3,4,6,7,8-Hexahydro-4,6,6,7,8,8-hexamethylcyclpenta-y-2-benzopyran, Dodecahydro-3a,6,6,9a-tetramethylnaphtho[2,Iblfuran, Anisaldehyd, Cumarin, Cedrol, Vanillin, Cyclopentadecanolid, Tricyctodecenylacetat und Tricyclodecenylpropionate.

Andere Duftstoffe sind ätherische Öle, Resinoide und Harze aus einer Vielzahl von Quellen, wie Perubalsam, Olibanum Resinoid, Styrax, Labdanumharz, Muskat, Cassiaöl, Benzoinharz, Koriander und Lavandin. Weitere geeignete Duftstoffe sind: Phenylethylalkohol, Terpineol, Linalool, Linalyl Acetat, Geraniol, Nerol, 2-(1,1-dimethylethyl)-cyclohexanolacetat, Benzylacetat und Eugenol.

Die Duft- oder Riechstoffe können als Reinsubstanzen oder im Gemisch untereinander eingesetzt werden. Der Duft- oder Riechstoff kann als alleiniges hydrophobes Material den Kern der Mikrokapseln bilden. Alternativ können die Mikrokapseln neben dem Duft- oder Riechstoff ein weiteres hydrophobes Material enthalten, in dem der Duft- oder Riechstoff gelöst oder dispergiert ist. So ist z. B. bei Verwendung von bei Raumtemperatur festen Duft- oder Riechstoffen der Einsatz eines bei Raumtemperatur flüssigen hydrophoben Materials als Lösung oder Dispergiermittel von Vorteil.

Ebenso kann zur Erhöhung der Hydrophobie eines Duft- oder Riechstoffs diesem Duft- oder Riechstoff ein weiteres hydrophobes Material beigefügt werden.

Vorzugsweise macht der Duft- oder Riechstoff oder das Gemisch von Duft- oder Riechstoffen 1 bis 100 Massen%, vorzugsweise 20 bis 100 Massen% des hydrophoben Kernmaterials aus. Das hydrophobe Material ist bei Temperaturen unter 100 °C, vorzugsweise bei Temperaturen unterhalb 60 °C und besonders bevorzugt bei Raumtemperatur flüssig.

In einer Ausführungsform der Erfindung wird die Schale der Mikrokapseln durch Polymerisation ethylenisch ungesättigter Monomere hergestellt. Die Schale wird durch Polymerisation von 30 bis 100 Massen%, vorzugsweise 30 bis 95 Massen% (jeweils bezogen auf die Gesamtmasse der Monomeren in der Schale), eines oder mehrerer C₁-C₂₄-Alkylester, bevorzugt eines oder mehrerer C₁-C₁₈-Alkylester, besonders bevorzugt eines oder mehrerer C₁-C₁₂-Alkylester und ganz besonders bevorzugt eines oder mehrerer C₁-C₄-Alkylester, der Acryl- und/oder Methacrylsäure hergestellt. Dabei handelt es sich beispielsweise um Methylacrylat, Methylmethacrylat, Ethylacrylat, Ethylmethacrylat, n-Propylacrylat, n-Propylmethacrylat, iso-Propylacrylat, iso-Propylmethacrylat, n-Butylacrylat, iso-Butylacrylat, tert-Butylacrylat, n-Butylmethacrylat, iso-Butylmethacrylat, tert-Butylmethacrylat, Cyclohexylacrylat, Cyclohexylmethacrylat, Octylacrylat, Octylmethacrylat, 2-Ethylhexylacrylat, 2-Ethylhexylmethacrylat, Laurylacrylat, Laurylmethacrylat, Stearylacrylat und Palmitylacrylat.

0 bis 70 Massen%, vorzugsweise 5 bis 40 Massen%, (jeweils bezogen auf die Gesamtmasse der Monomeren in der Schale) der Schale werden von einer Mischung aus mindestens 2 bi- oder polyfunktionellen Monomeren, d. h. zwei- oder mehrfach ethylenisch ungesättigten Verbindungen, gebildet. Dies sind z. B. Acrylsäure-und Methacrylsäureester, die sich von zweiwertigen C₂-C₂₄-Alkoholen ableiten, z. B. Ethylenglycoldiacrylat, Propylenglycoldiacrylat, Ethylenglycoldimethacrylat, Propylenglycoldimethacrylat, 1,4-Butandioldiacrylat, 1,4-Butandioldimethacrylat, 1,6-Hexandioldiacrylat und 1,6-Hexandioldimethacrylat sowie Divinylbenzol, Methallylmethacrylamid, Allylmethacrylat, Allylacrylat, Methylenbisacrylamid, Trimethylolpropantriacrylat, Trimethylolpropantrimethacrylat, Pentaerythrittriallylether, Pentaerythrittetraacrylat und Pentaerythrittetramethacrylat.

0 bis 40 Massen%, vorzugsweise 0 bis 30 Massen%, der Schale können aus sonstigen Monomeren aufgebaut sein. Hierzu zählen insbesondere vinylaromatische Verbindungen, wie Styrol und α-Methylstyrol, Vinylpyridin, Vinylester von C₁-C₂₀-Carbonsäuren, wie Vinylacetat, Vinylpropionat, Methacrylnitril, Methacrylamid, N-Methylmethacrylamid, Dimethylaminopropylmethacrylamid, Dimethylaminoethylacrylat, Dimethylaminomethacrylat, Vinylcyclohexan, Vinylchlorid, Vinylidenchlorid, 2-Hydroxypropylacrylat, Methacrylsäure und 2-Hydroxypropylmethacrylat.

Die Mikrokapseln sind durch Polymerisation des die Schale bildenden Monomers oder Monomergemisches in der Ölphase einer stabilen Öl-in-Wasser-Emulsion erhältlich, wobei die Ölphase aus dem oben genannten hydrophoben Material besteht. Vor dem Start der Polymerisation muss eine Mischung aus Monomeren und hydrophober Phase vorliegen, die wenigstens einen Duft- oder Riechstoff enthält. Dieses Herstellungsverfahren ist an sich bekannt und z. B. in der EP-A-0 457 154 beschrieben.

Der Kern der Mikrokapseln wird von dem in Wasser emulgierbaren hydrophoben Material gebildet. Das hydrophobe Material dient gleichzeitig als Lösungs- oder Dispergiermittel für das bei der Herstellung der Kapselhülle durch Polymerisation eingesetzte Monomergemisch. Die Polymerisation findet dann in der Ölphase einer stabilen Öl-in-Wasser-Emulsion statt. Diese Emulsion erhält man, indem man beispielsweise zunächst die Monomeren und einen Polymerisationsinitiator sowie gegebenenfalls einen Polymerisationsregler in dem hydrophoben Material löst und die so erhaltene Lösung in einem wässrigen Medium mit einem Emulgator und/oder Schutzkolloid emulgiert. Man kann jedoch auch zunächst die hydrophobe Phase oder Bestandteile davon in der wässrigen Phase emulgieren und dann zur Emulsion die Monomeren oder den Polymerisationsinitiator sowie die gegebenenfalls noch mit zu verwendenden Hilfsstoffe, wie Schutzkolloide oder Polymerisationsregler zugeben.

Bei einer anderen Verfahrensvariante kann man auch das hydrophobe Material und die Monomeren in Wasser emulgieren und anschließend nur noch den Polymerisationsinitiator zugeben. Da das hydrophobe Material in der Emulsion möglichst vollständig mikroverkapselt werden soll, werden vorzugsweise nur solche hydrophobe Materialien eingesetzt, deren Löslichkeit in Wasser begrenzt ist. Die Löslichkeit sollte vorzugsweise 5 Gew.-% nicht übersteigen. Für eine vollständige Verkapselung des hydrophoben Materials in der Ölphase der Öl-in-Wasser-Emulsion ist es zweckmäßig, die Monomeren entsprechend ihrer Löslichkeit im hydrophoben Material auszuwählen. Während die Monomeren im Öl im Wesentlichen löslich sind, entstehen daraus bei der Polymerisation in den einzelnen Öltröpfchen Oligo- und Polymere, die weder in der Ölphase noch in der Wasserphase der Öl-in-Wasser-Emulsion löslich sind und an die Grenzfläche zwischen den Öltröpfchen und der Wasserphase wandern. Dort bilden sie im Verlauf der weiteren Polymerisation das Wandmaterial, das schließlich das hydrophobe Material als Kern der Mikrokapseln umhüllt.

Zur Ausbildung einer stabilen Öl-in-Wasser-Emulsion werden in der Regel Schutzkolloide und/oder Emulgatoren verwendet. Geeignete Schutzkolloide sind z. B. Cellulosederivate, wie Hydroxyethylcellulose, Carboxymethylcellulose und Methylcellulose, Polyvinylpyrrolidon und Copolymere des N-Vinylpyrrolidons, Polyvinylalkohole und partiell hydrolysierte Polyvinylacetate. Besonders bevorzugt sind dabei die Polyvinylalkohole. Daneben sind auch Gelatine, Gummi Arabicum, Xanthangummi, Alginate, Pectine, abgebaute Stärken und Kasein einsetzbar. Auch ionische Schutzkolloide können Verwendung finden. Als ionische Schutzkolloide lassen sich PolyAcrylsäure, PolymethAcrylsäure, Copolymerisate aus Acrylsäure und Methacrylsäure, sulfonsäuregruppenhaltige wasserlösliche Polymere mit einem Gehalt an Sulfoethylacrylat, Sulfoethylmethacrylat oder Sulfopropylmethacrylat, sowie Polymerisate von N-(Sulfoethyl)-maleinimid, 2-Acrylamido-2-alkylsulfonsäuren, Styrolsulfonsäuren und Formaldehyd sowie Kondensate aus Phenolsulfonsäuren und Formaldehyd verwenden. Die Schutzkolloide werden im Allgemeinen in Mengen von 0,1 bis 10 Massen%, bezogen auf die Wasserphase der Emulsion, zugesetzt. Die als ionische Schutzkolloide verwendeten Polymerisate haben vorzugsweise mittlere Molmassen M_{w} von 500 bis 1.000.000 g/mol, vorzugsweise 1.000 bis 500.000 g/mol.

Die Polymerisation erfolgt in der Regel in Gegenwart von Radikale bildenden Polymerisationsinitiatoren. Hierfür können alle üblichen Peroxo- und Azoverbindungen in den üblicherweise eingesetzten Mengen, z. B. von 0,1 bis 5 Massen%, bezogen auf die Masse der zu polymerisierenden Monomere, verwendet werden. Bevorzugt sind solche Polymerisationsinitiatoren, die in der Ölphase oder in den Monomeren löslich sind. Beispiele dafür sind t-Butylperoxyneodecanoat, t-Butylperoxypivalat, t-Amylperoxypivalat, Dilauroylperoxid, t-Amylperoxy-2-ethylhexanoat und dergleichen.

Die Polymerisation der Öl-in-Wasser-Emulsion wird üblicherweise bei 20 bis 100 °C, vorzugsweise bei 40 bis 90 °C, durchgeführt. Üblicherweise wird die Polymerisation bei Normaldruck vorgenommen, kann jedoch auch bei vermindertem oder erhöhtem Druck erfolgen, z. B. im Bereich von 0,5 bis 20 bar. Zweckmäßigerweise geht man so vor, dass man eine Mischung aus Wasser, Schutzkolloid und/oder Emulgatoren, hydrophoben Materialien, Polymerisationsinitiatoren und Monomeren mit einem schnelllaufenden Dispergator auf die gewünschte Tröpchengröße des hydrophoben Materials emulgiert und die stabile Emulsion unter Rücksicht auf die Zerfallstemperatur des Polymerisationsinitiators erhitzt. Die Geschwindigkeit der Polymerisation kann dabei durch die Wahl der Temperatur und der Menge des Polymerisationsinitiators in bekannter Weise gesteuert werden. Nach Erreichen der Polymerisationstemperatur setzt man die Polymerisation zweckmäßigerweise noch weitere Zeit, z. B. 2 bis 6 Stunden lang fort, um den Umsatz der Monomeren zu vervollständigen.

Besonders bevorzugt ist eine Arbeitsweise, bei der man während der Polymerisation die Temperatur des polymerisierenden Reaktionsgemisches kontinuierlich oder periodisch erhöht. Dies geschieht mit Hilfe eines Programms mit ansteigender Temperatur.

Die gesamte Polymerisationszeit kann zu diesem Zweck in zwei oder mehr Perioden unterteilt werden. Die erste Polymerisationsperiode ist durch einen langsamen Zerfall des Polymerisationsinitiators gekennzeichnet. In der zweiten Polymerisationsperiode und gegebenenfalls weiteren Polymerisationsperioden wird die Temperatur der Reaktionsmischung erhöht, um den Zerfall der Polymerisationsinitiatoren zu beschleunigen. Die Temperatur kann in einem Schritt oder in mehreren Schritten oder kontinuierlich in linearer oder nichtlinearer Weise erhöht werden. Die Temperaturdifferenz zwischen dem Beginn und dem Ende der Polymerisation kann bis zu 50 °C betragen. Im Allgemeinen beträgt diese Differenz 3 bis 40 °C, vorzugsweise 3 bis 30 °C.

Die nach einer der vorstehend geschilderten Vorgehensweisen erhaltenen Mikrokapseldispersionen können anschließend in üblicher Weise sprühgetrocknet werden. Zur Erleichterung der Redispergierung der sprühgetrockneten Mikrokapseln können den Dispersionen vor der Sprühtrocknung gegebenenfalls zusätzliche Mengen an Emulgator und/oder Schutzkolloid zugegeben werden. Geeignete Emulgatoren beziehungsweise Schutzkolloide sind die vorstehend im Zusammenhang mit der Herstellung der Mikrokapseldispersion genannten. Im Allgemeinen wird die wässrige Mikrokapseldispersion in einem Warmluftstrom zerstäubt, der im Gleich- oder Gegenstrom, vorzugsweise im Gleichstrom, mit dem Sprühnebel geführt wird. Die Eingangstemperatur des Warmluftstroms liegt üblicherweise im Bereich von 100 bis 200 °C, vorzugsweise 120 bis 160 °C, und die Ausgangstemperatur des Luftstroms liegt im Allgemeinen im Bereich von 30 bis 90 °C, vorzugsweise 60 bis 80 °C. Das Versprühen der wässrigen Mikrokapseldispersion kann beispielsweise mittels Ein- oder Mehrstoffdüsen oder über eine rotierende Scheibe erfolgen.

Die Abscheidung der sprühgetrockneten Mikrokapseln erfolgt normalerweise unter Verwendung von Zyklonen oder Filterabscheidem.

Die so erhältlichen Mikrokapseln haben vorzugsweise einen mittleren Durchmesser im Bereich von 1 bis 100 µm, besonders bevorzugt von 1 bis 50 µm und ganz besonders bevorzugt von 1 bis 30 µm.

Auf Grund der vorgesehenen Verwendung ergibt sich auch für das Verhältnis von Dicke der Schale zum Durchmesser der Kapsel ein bevorzugter Bereich. So ist eine Mikrokapsel bevorzugt, bei der das Verhältnis der Dicke der Schale zum Durchmesser der Mikrokapsel im Bereich von 0,0005 bis 0,2 liegt, besonders bevorzugt im Bereich von 0,005 bis 0,08 und ganz besonders bevorzugt von 0,015 bis 0,055.

Weiterer Gegenstand der vorliegenden Erfindung ist eine chemische Zusammensetzung enthaltend Mikrokapseln wie sie oben beschrieben sind. So können die flüssigen Mikrokapselzubereitungen oder sprühgetrockneten Mikrokapseln insbesondere zur Formulierung von Wasch- oder Reinigungsmitteln verwendet werden. Sie können aber auch zur Formulierung von z. B. Klebstoffen, Farben, Kosmetika, Repellents und Dispersionen verwendet werden.

Besonders bevorzugt ist allerdings eine chemische Zusammensetzung, die mindestens einen Stoff enthält, der ausgewählt ist aus der Gruppe bestehend aus Tensid, Desinfektionsmittel, Farbstoff, Säure, Base, Komplexbildner, Biozid, Hydrotrop, Verdickungsmittel, Builder, Cobuilder, Enzym, Bleichmittel, Bleichaktivator, Korrosionsinhibitoren, Bleichkatalysatoren, Farbschutzadditive, Farbübertragungsinhibitoren, Vergrauungsinhibitoren, Soil-Release-Polymere, Faserschutzadditive, Silicone, Bakterizide und Konservierungsmittel, organische Lösemittel, Löslichkeitsvermittler, Auflösungsverbesserer und Parfüm.

Tenside bestehen im Allgemeinen aus einem hydrophoben und aus einem hydrophilen Teil. Dabei weist der hydrophobe Teil im Allgemeinen eine Kettenlänge von 4 bis 20 C-Atomen, vorzugsweise 6 bis 19 C-Atomen und besonders bevorzugt 8 bis 18 C-Atomen auf. Die funktionelle Einheit der hydrophoben Gruppe ist im Allgemeinen eine OH-Gruppe, wobei der Alkohol verzweigt oder unverzweigt sein kann. Der hydrophile Teil besteht im Allgemeinen im Wesentlichen aus alkoxylierten Einheiten (z. B. Ethylenoxid (EO), Propylenoxid (PO) und/oder Butylenoxid (BO), wobei sich üblicherweise 2 bis 30, vorzugsweise 5 bis 20 dieser alkoxylierten Einheiten aneinanderreihen, und/oder geladenen Einheiten wie Sulfat, Sulfonat, Phosphat, Carbonsäuren, Ammonium und Amoniumoxid.

Beispiele für anionische Tenside sind: Carboxylate, Sulfonate, Sulfofettsäuremethylester, Sulfate, Phosphate. Beispiele für kationische Tenside sind: quartäre Ammoniumverbindungen. Beispiele für Betain-Tenside sind: Alkylbetaine. Beispiele für nichtionische Verbindungen sind: Alkoholalkoxylate.

Dabei wird unter einem "Carboxylat" eine Verbindung verstanden, die mindestens eine Carboxylat-Gruppe im Molekül aufweist. Beispiele für Carboxylate, die erfindungsgemäß verwendet werden können, sind
➢ Seifen - z. B. Stearate, Oleate, Cocoate der Alkalimetalle oder des Ammoniums,
➢ Ethercarboxylate - z. B. Akypo® RO 20, Akypo® RO 50, Akypo® RO 90.

Unter einem "Sulfonat" wird eine Verbindung verstanden, die mindestens eine Sulfonat-Gruppe im Molekül aufweist. Beispiele für Sulfonate, die erfindungsgemäß verwendet werden können, sind
➢ Alkylbenzolsulfonate - z. B. Lutensit® A-LBS, Lutensit® A-LBN, Lutensit® A-LBA, Marione® AS3, Maranil® DBS,
➢ Alkylsulfonate - z. B. Alscoap OS-14P, BIO-TERGE® AS-40, BIO-TERGE® AS-40 CG, BIO-TERGE® AS-90 Beads, Calimulse® AOS-20, Calimulse® AOS-40, Calsoft® AOS-40, Colonial® AOS-40, Elfan® OS 46, Ifrapor® AOS 38, Ifrapon® AOS 38 P, Jeenate® AOS-40, Nikkol® OS-14, Norfox® ALPHA XL, POLYSTEP® A-18, Rhodacal® A-246L, Rhodacal® LSS-40/A,
➢ Sulfonierte Öle wie z.B. Türkischrotöl,
➢ Olefinsulfonate,
➢ aromatische Sulfonate - z.B. Nekal® BX, Dowfax® 2A1.

Dabei wird unter einem "Sulfofettsäuremethylester" eine Verbindung verstanden, die folgende Einheit der allgemeinen Formel (I) aufweist: 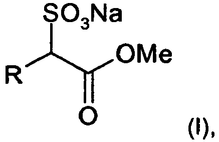 bei der R 10 bis 20 C-Atome aufweist; vorzugsweise weist R 12 bis 18 und besonders bevorzugt 14 bis 16 C-Atome auf.

Dabei wird unter einem "Sulfat" eine Verbindung verstanden, die mindestens eine SO₄-Gruppe im Molekül aufweist. Beispiele für Sulfate, die erfindungsgemäß verwendet werden können, sind
➢ Fettalkoholsulfate wie z. B. Kokosfettalkoholsulfat (CAS 97375-27-4) - z. B. EMAL® 10G, Dispersogen® SI, Elfan® 280, Mackol® 100N,
➢ andere Alkoholsulfate - z. B. Emal® 71, Lanette® E,
➢ Kokosfettalkoholethersulfat - z. B. Emal® 20C, Latemul® E150, Sulfochem® ES-7, Texapon® ASV-70 Spec., Agnique SLES-229-F, Octosol 828, POLYSTEP® B-23, Unipol® 125-E, 130-E, Unipol® ES-40,
➢ andere Alkoholethersulfate - z. B. Avanel® S-150, Avanel® S 150 CG, Avanel® S 150 CG N, Witcolate® D51-51, Witcolate® D51-53.

Unter einem "Phosphat" wird vorliegend eine Verbindung verstanden, die mindestens eine PO₄-Grupp im Molekül aufweist. Beispiele für Phosphate, die erfindungsgemäß verwendet werden können, sind
➢ Alkyletherphosphate - z. B. Maphos® 37P, Maphos® 54P, Maphos® 37T, Maphos® 210T und Maphos® 210P,
➢ Phospaphate wie Lutensit A-EP,
➢ Alkylphosphate.

Die anionischen Tenside werden bei der Herstellung der chemischen Zusammensetzung vorzugsweise in Form von Salzen zugegeben. Geeignete Salze sind dabei z. B. Alkalimetallsalze, wie Natrium-, Kalium- und Lithiumsalze, und Ammoniumsalze, wie Hydroxyethylammonium-, Di(hydroxy-ethyl)ammonium- und, Tri(hydroxyethyl)ammoniumsalze.

Unter einer "quartären Ammoniumverbindung" wird eine Verbindung verstanden, die mindestens eine R₄N⁺-Gruppe im Molekül aufweist. Beispiele für quartäre Ammoniumverbindungen, die erfindungsgemäß verwendet werden können, sind
➢ Halogenide, Methosulfate, Sulfate und Carbonate von Kokosfett-, Talgfett- oder Cetyl/Oleyltrimethylammonium.

Als besonders geeignete kationische Tenside seien genannt:
- C₇-C₂₅-Alkylamine;
- N,N-Dimethyl-N-(hydroxy-C₇-C₂₅-alkyl)ammoniumsalze;
- mit Alkylierungsmitteln quaternisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln II oder III 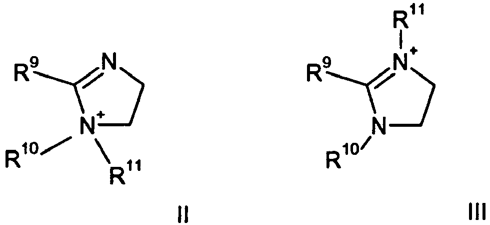 in denen die Variablen folgende Bedeutung haben:
   R⁹ C₁-C₂₅-Alkyl oder C₂-C₂₅-Al kenyl ;
   R¹⁰ C₁-C₄-Alkyl oder Hydroxy-C₁-C₄-alkyl;
   R¹¹ C₁-C₄-Alkyl, Hydroxy-C₁-C₄-alkyl oder ein Rest R¹-(CO)-X-(CH₂)ₘ,- (X:-O- oder -NH-; m: 2 oder 3),
wobei mindestens ein Rest R⁹ C₇-C₂₂-Alkyl ist.

Weiterhin wird unter einem "Betain-Tensid" eine Verbindung verstanden, die unter Anwendungsbedingungen, d. h. zum Beispiel im Falle der Textilwäsche unter Normaldruck und bei Temperaturen von Raumtemperatur bis 95°C, je mindestens eine positive und negative Ladung trägt. Ein "Alkylbetain" ist dabei ein Betain-Tensid, das mindestens eine Alkyl-Einheit im Molekül aufweist. Beispiele für Betain-Tenside, die erfindungsgemäß verwendet werden können, sind Cocamidopropylbetain - z. B. MAFO® CAB, Amonyl® 380 BA, AMPHOSOL® CA, AMPHOSOL® CG, AMPHOSOL® CR, AMPHOSOL® HCG; AMPHOSOL® HCG-50, Chembetaine® C, Chembetaine® CGF, Chembetaine® CL, Dehyton® PK, Dehyton® PK 45, Emery® 6744, Empigen® BS/F, Empigen® BS/FA, Empigen® BS/P, Genagen® CAB, Lonzaine® C, Lonzaine® CO, Mirataine® BET-C-30, Mirataine® CB, Monateric® CAB, Naxaine® C, Naxaine® CO, Norfox® CAPB, Norfox® Coco Betaine, Ralufon® 414, TEGO®-Betain CKD, TEGO® Betain E KE 1, TEGO®-Betain F, TE-GO®-Betain F 50 und Aminoxide wie z.B. Alkyldimethylaminoxide, d. h. Verbindungen der allgemeinen Formel (IV) 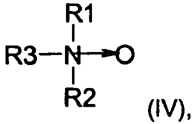 bei denen R1, R2 und R3 unabhängig voneinander für einen aliphatischen, cyclischen oder tertiären Alkyl- od. Amidoalkyl-Rest stehen, wie z. B. Mazox® LDA, Genaminox®, Aromox® 14 DW 970.

Nichtionische Tenside sind grenzflächenaktive Stoffe mit einer ungeladenen, im neutralen pH-Bereich keine Ionenladung tragenden, polaren, hydrophilen, wasserlöslich machenden Kopfgruppe (im Unterschied zu anionischen und kationischen Tensiden), die an Grenzflächen adsorbiert und oberhalb der kritischen Micellbildungskonzentration (cmc) zu neutralen Micellen aggregiert. Je nach Art der hydrophilen Kopfgruppe kann man unterscheiden zwischen (Oligo)oxyalkylen-Gruppen, insbesondere (Oligo)oxyethylen-Gruppen (Polyethylenglycol-Gruppen), wozu die Fettalkoholpolyglycolether (Fettalkoholalkoxylate), Alkylphenolpolyglycolether sowie Fettsäureethoxylate, alkoxylierte Triglyceride und Mischether (beidseitig alkylierte Polyethylenglycolether) zählen; und Kohlenhydrat-Gruppen, zu denen z. B. die Alkylpolyglucoside und Fettsäure-N-methylglucamide zählen.

Alkoholalkoxylate, basieren auf einem hydrophoben Teil mit einer Kettenlänge von 4 bis 20 C-Atomen, vorzugsweise 6 bis 19 C-Atomen und besonders bevorzugt 8 bis 18 C-Atomen, wobei der Alkohol verzweigt oder unverzweigt sein kann, und einem hydrophilen Teil, bei dem es sich um alkoxylierte Einheiten, z. B. Ethylenoxid (EO), Propylenoxid (PO) und/oder Butylenoxid (BuO), mit 2 bis 30 Wiederholungseinheiten handeln kann. Beispiele sind u.a. Lutensol ® XP, Lutensol ® XL, Lutensol ® ON, Lutensol ® AT, Lutensol ® A, Lutensol ® AO, Lutensol ® TO.

Alkoholphenolalkoxylate sind Verbindungen der allgemeinen Formel (V), 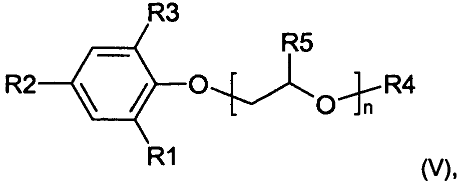 die durch Anlagerung von Alkylenoxid, vorzugsweise von Ethylenoxid an Alkylphenole hergestellt werden. Vorzugsweise ist dabei R4 = H. Bevorzugt ist es außerdem, wenn R5 = H ist, - es sich somit um EO handelt; ebenso ist es bevorzugt, wenn R5 = CH₃ ist, es sich also um PO handelt, oder, wenn R5 = CH₂CH₃ ist und es sich um BuO handelt. Besonders bevorzugt ist außerdem eine Verbindung, in der Octyl- [(R1 = R3 = H, R2 = 1,1,3,3-Tetramethylbutyl (Diisobutylen)], Nonyl- [(R1 = R3 = H, R2 = 1,3,5-Trimethylhexyl (Tripropylen)], Dodecyl-, Dinonyl- oder Tributylphenolpolyglycolether (z. B. EO, PO, BuO), R-C₆H₄-O-(EO/PO/BuO)n mit R = C8 bis C12 und n = 5 bis 10, vorliegen. Nichtabschließende Beispiele für derartige Verbindungen sind: Norfox® OP-102, Surfonic® OP-120, T-Det® O-12.

Fettsäureethoxilate sind mit unterschiedlichen Mengen Ethylenoxid (EO) nachbehandelte Fettsäureester.

Triglyceride sind Ester des Glycerols (Glyceride), in denen alle drei Hydroxy-Gruppen mit Fettsäuren verestert sind. Diese können mit Alkylenoxid modifiziert werden.

Fettsäurealkanolamide sind Verbindungen der allgemeinen Formel (VI) 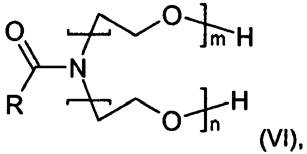 die mindestens eine Amid-Gruppe mit einem Alkylrest R und einen oder zwei Alkoxylrest(e) aufweist, wobei R 11 bis 17 C-Atome umfasst und 1 ≤ m + n ≤ 5 ist.

Alkylpolyglycoside sind Gemische aus Alkylmonoglucosid (Alkyl- α-D- und - β-D-glucopyranosid sowie geringen Anteilen -glucofuranosid), Alkyldiglucosiden (-isomaltosiden, -maltosiden und anderen) und Alkyloligoglucosiden (-maltotriosiden, -tetraosiden und anderen). Alkylpolyglycoside sind unter anderem durch sauer katalysierte Reaktion (Fischer-Reaktion) aus Glucose (oder Stärke) oder aus n-Butylglucosiden mit Fettalkoholen zugänglich. Alkylpolyglycoside entsprechen der allgemeinen Formel (VII) 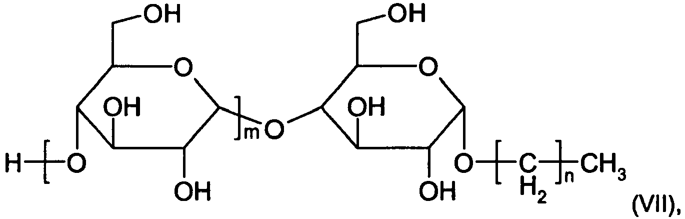 in der
m = 0 bis 3 und
n = 4 bis 20 ist.

Ein Beispiel ist Lutensol ® GD70.

In der Gruppe nichtionischer N-alkylierter, vorzugsweise N-methylierter, Fettsäureamide der allgemeinen Formel (VIII) 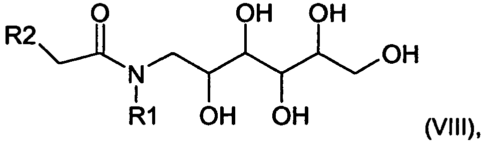 steht R1 für einen n-C₁₂-Alkyl-Rest, R2 für einen Alkyl-Rest mit 1 bis 8 C-Atomen. R2 ist vorzugsweise Methyl.

Eine Zusammensetzung wie beschrieben, die außerdem mindestens ein Desinfektionsmittel enthält, ist besonders bevorzugt. Dabei liegt das mindestens eine Desinfektionsmittel in einer (Gesamt-)Menge von 0,1 bis 20 Massen%, vorzugsweise von 1 bis 10 Massen% in der Zusammensetzung vor.

Desinfektionsmittel können sein: Oxidationsmittel, Halogene wie Chlor und Iod und diese freisetzende Stoffe, Alkohole wie Ethanol, 1- Propanol und 2-Propanol, Aldehyde, Phenole, Ethylenoxid, Chlorhexidin und Mecetroniummetilsulfat.

Der Vorteil der Verwendung von Desinfektionsmitteln besteht darin, dass sich Krankheitserreger auf der behandelten Oberfläche kaum verbreiten können. Krankheitserreger können sein: Bakterien, Sporen, Pilze und Viren.

Farbstoffe können neben anderen sein: Acid Blue 9, Acid Yellow 3, Acid Yellow 23, Acid Yellow 73, Pigment Yellow 101, Acid Green 1, Acid Green 25.

Bevorzugt ist eine Zusammensetzung, bei der der mindestens eine Farbstoff in einer (Gesamt-)Menge von 0,1 bis 20 Massen%, besonders bevorzugt von 1 bis 10 Massen% vorliegt.

Säuren sind Verbindungen die vorteilhaft zum Beispiel zum Lösen von bzw. zur Verhinderung von Kalkablagerungen verwendet werden. Beispiele für Säuren sind Ameisensäure, Essigsäure, Citronensäure, Salzsäure, Schwefelsäure und Sulfonsäure.

Basen sind Verbindungen, die vorteilhaft für das Einstellen des günstigen pH-Wertbereiches für Komplexbildner verwendet werden können. Beispiele für Basen, die erfindungsgemäß verwendet werden können, sind: NaOH, KOH und Aminethanol.

Als anorganische Builder eignen sich insbesondere:
- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist;
- Kristalline Silikate, wie insbesondere Disilikate und Schichtsilikate, z.B. δ- und β-Na₂Si₂O₅. Die Silikate können in Form ihrer Alkalimetall-, Erdalkalimetall- oder Ammoniumsalze eingesetzt werden, bevorzugt sind die Na-, Li- und Mg-Silikate;
- Amorphe Silikate, wie Natriummetasilikat und amorphes Disilikat;
- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat; sowie
- Polyphosphate, wie Pentanatriumtriphosphat.

Als oligomere und polymere Cobuilder eignen sich:
Oligomere und polymere Carbonsäuren, wie Homopolymere von Acrylsäure und Asparaginsäure, Oligomaleinsäuren, Copolymere der Maleinsäure mit Acrylsäure, Methacrylsäure oder C₂-C₂₂-Olefinen, z.B. Isobuten oder langkettigen α-Olefinen, Vinyl-C₁-C₈-alkylether, Vinylacetat, Vinylpropionat, (Meth)Acrylsäureester von C₁-C₈-Alkoholen und Styrol. Bevorzugt sind die Homopolymere der Acrylsäure und Copolymere von Acrylsäure mit Maleinsäure. Die oligomeren und polymeren Carbonsäuren werden in Säureform oder als Natriumsalz eingesetzt

Komplexbildner sind Verbindungen, die Kationen zu binden vermögen. Dies kann genutzt werden, um die Härte des Wassers zu verringern und um störende Schwermetallionen auszufällen. Beispiele für Komplexbildner sind NTA, EDTA, MGDA, DTPA, DTPMP, IDS, HEDP, β-ADA, GLDA, Zitronensäure, Oxoidibernsteinsäure und Butantetracarbonsäure. Der Vorteil des Einsatzes dieser Verbindungen liegt darin, dass viele reinigungsaktive Verbindungen in weichem Wasser bessere Wirkung erzielen; außerdem kann durch Verringerung der Wasserhärte das Auftreten von Kalkablagerungen nach der Reinigung vermieden werden. Durch Verwendung dieser Verbindungen entfällt somit die Notwendigkeit des Trocknens einer gereinigten Oberfläche. Dies ist vom Arbeitsablauf her vorteilhaft und insbesondere deshalb erstrebenswert, da auf diese Weise die zur Konservierung aufgebrachte erfindungsgemäße Zusammensetzung nicht teilweise wieder entfernt wird. Im Falle der Behandlung von Textilien bleiben die Fasern beweglicher, so dass sich ein besseres Tragegefühl einstellt.

Geeignete Vergrauungsinhibitoren sind beispielsweise Carboxymethylcellulose und Pfropfpolymere von Vinylacetat auf Polyethylenglykol.

Geeignete Bleichmittel sind beispielsweise Addukte von Wasserstoffperoxid an anorganische Salze, wie Natriumperborat-Monohydrat, Natriumperborat-Tetrahydrat und Natriumcarbonat-Perhydrat, und Percarbonsäuren, wie Phthalimidopercapronsäure.

Als Bleichaktivatoren eignen sich z.B. N,N,N',N'-Tetraacetylethylendiamin (TAED), Natrium-p-nonanoyloxybenzolsulfonat und N-Methylmorpholiniumacetonitrilmethyl-sulfat.

Geeignete Enzyme sind beispielsweise Proteasen, Lipasen, Amylasen, Cellulasen, Mannanasen, Oxidasen und Peroxidasen.

Als Farbübertragungsinhibitoren geeignet sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Biozide sind Verbindungen, die Bakterien abtöten. Ein Beispiel für ein Biozid ist Glutaraldehyd. Der Vorteil der Verwendung von Bioziden liegt darin, dass sie der Verbreitung von Krankheitserregern entgegenwirken.

Hydrotrope sind Verbindungen, die die Löslichkeit des Tensides / der Tenside in der chemischen Zusammensetzung verbessern. Ein Beispiel für ein Hydrotrop ist: Cumolsulfonat.

Verdickungsmittel sind Verbindungen, die die Viskosität der chemischen Zusammensetzung erhöhen. Nichteinschränkende Beispiele für Verdickungsmittel sind: Polyacrylate und hydrophob modifizierte Polyacrylate. Der Vorteil der Verwendung von Verdickungsmitteln liegt darin, dass Flüssigkeiten mit höherer Viskosität auf geneigten oder vertikalen Oberflächen eine höhere Verweilzeit aufweisen als Flüssigkeiten mit niedrigerer Viskosität. Dies erhöht die Wechselwirkungszeit zwischen Zusammensetzung und zu reinigender Oberfläche.

Die Verwendung der erfindungsgemäßen Mikrokapseln zur Herstellung der erfindungsgemäßen chemischen Zusammensetzung bildet einen weiteren Gegenstand der Erfindung.

Ein weiterer Gegenstand der vorliegenden Erfindung ist die Verwendung von erfindungsgemäßen Mikrokapseln zur Behandlung von Oberflächen. Bevorzugt ist dabei eine Verwendung, bei der die zu behandelnde Oberfläche ausgewählt ist aus der Gruppe bestehend aus Fasern, Vliesen, Schaumstoffen, Fliesen, Kacheln, Marmor, Keramik, Beton, Kunststoff, Metall, Email, Glas. Besonders bevorzugt ist eine Verwendung, bei der der zu behandelnde Gegenstand ein Textil ist.

Daher ist auch die Verwendung von erfindungsgemäßen Mikrokapseln und insbesondere die Verwendung einer chemischen Zusammensetzung enthaltend erfindungsgemäße Mikrokapseln in der Textilwäsche ein besonders bevorzugter Gegenstand der vorliegenden Erfindung.

Weiterer Gegenstand der vorliegenden Erfindung ist ein Gegenstand, der erfindungsgemäße Mikrokapseln aufweist und bevorzugt ist ein Gegenstand der die erfindungsgemäßen Mikrokapseln auf seiner Oberfläche aufweist.

Als Gegenstand geeignet ist dabei jeder Körper, bei dem es gewünscht ist, dass er bei Berührung, d.h. bei Druckbelastung einen bestimmten Geruch abgibt. Nichtabschließende Beispiele sind: Verpackungsmaterial aller Art wie Karton, Folie, Klebstoff, Klebeetiketten, Reinigungstücher, Vliese, Lederprodukte, Farben und Lacke, Kosmetikprodukte, jegliche Art von Behältern, insbesondere solchen, die Lebensmittel oder Kosmetika enthalten, Glas, Kunststoffteilen, Autos usw.

Die Erfindung wird im Folgenden durch Beispiele weiter beschrieben:

### Beispiele

### Beispiel 1 - Vergleichsbeispiel:

### Nur bifunktioneller Vernetzer: 1,4-Butandioldiacrylat

In einen 2 I-Kessel mit Dispenserrührer (Durchmesser 5 cm) wurde folgendes Gemisch
aus Wasserphase

| | |
|---|---|
| 409,45 g | Wasser |
| 416,5 g | Polyvinylalkohol [Mowiol^{®} 40 / 88 (10% in Wasser)] |
| 1,91 g | NaNO₂ |

und Ölphase

| | |
|---|---|
| 46,2 g | Methylmethacrylat |
| 44,55 g | 1,4-Butandioldiacrylat |
| 9,25 g | Dimethylaminoethylmethacrylat |
| 1,55g | 2-Ethylthioglykonat |
| 100 g | Citral (CAS-Nr. 5392-40-5) |
| 300 g | Weißöl (CAS-Nr. 8042-47-5) |

gegeben (Gesamtmenge 1362,5 g)

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 1,33 g tert-Butylperpivalat (75 %ige Lösung in Isododecan) und zum Spülen 1,15 g Wasser zugegeben und der Kessel innerhalb von 1 Stunde auf 70 °C aufgeheizt. Der Kesselinhalt wurde anschließend über 1 Stunde auf 85 °C erwärmt, und danach bei dieser Temperatur 1 Stunde gehalten. Es wurden 4,89 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,27 g Ascorbinsäure in 25,4 g Wasser zudosiert wurde.

Der Feststoffgehalt dieser Dispersion lag bei 37,6%, mit einer mittleren Teilchengröße von 2,179 µm (mittels Lichtstreuung bestimmt).

### Beispiel 2 - Vergleichsbeispiel:

### Nur tretrafunktioneller Vernetzer: Pentaerythrit-tetracrylat

In einen 2 I-Kessel mit Dispenserrührer (Durchmesser 5 cm) wurde folgendes Gemisch
aus Wasserphase

| | |
|---|---|
| 409,45 g | Wasser |
| 416,5 g | Polyvinylalkohol [Mowiol^{®} 40 / 88 (10% in Wasser)] |
| 1,91 g | NaNO₂ |

und Ölphase

| | |
|---|---|
| 46,2 g | Methylmethacrylat |
| 9,25 g | Dimethylaminoethylmethacrylat |
| 40 g | Pentaerythrit-tetracrylat |
| 1,55g | 2-Ethylthioglykonat |
| 100 g | Citral (CAS-Nr. 5392-40-5) |
| 300 g | Weißöl (CAS-Nr. 8042-47-5) |

gegeben (Gesamtmenge 1362,5 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 1,33 g tert-Butylperpivalat (75 %ige Lösung in Isododecan) und zum Spülen 1,15 g Wasser zugegeben und der Kessel innerhalb von 1 Stunde auf 70 °C aufgeheizt. Der Kesselinhalt wurde anschließend über 1 Stunde auf 85 °C erwärmt, und danach bei dieser Temperatur 1 Stunde gehalten. Es wurden 4,89 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,27 g Ascorbinsäure in 25,4 g Wasser zudosiert wurde.

Der Feststoffgehalt dieser Dispersion lag bei 37,8%, mit einer mittleren Teilchengröße von 2,737 µm (mittels Lichtstreuung bestimmt).

### Beispiel 3:

### Vernetzermischung: Bi- und Tetrafunktioneller Vernetzer: 1,4-Butandioldiacrylat & Pentaerythrit-tetracrylat

In einen 2 I-Kessel mit Dispenserrührer (Durchmesser 5 cm) wurde folgendes Gemisch
aus Wasserphase

| | |
|---|---|
| 328,45 g | Wasser |
| 333,2 g | Polyvinylalkohol [Mowiol^{®} 40 / 88 (10% in Wasser)] |
| 1,53 g | NaNO₂ |

und Ölphase

| | |
|---|---|
| 40 g | Methylmethacrylat |
| 24 g | 1,4-Butandioldiacrylat |
| 8 g | Dimethylaminoethylmethacrylat |
| 8 g | Pentaerythrit-tetracrylat |
| 1,24g | 2-Ethylthioglykonat |
| 80 g | Citral (CAS-Nr. 5392-40-5) |
| 240 g | Weißöl (CAS-Nr. 8042-47-5) |

gegeben (Gesamtmenge 1090 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 1,06 g tert-Butylperpivalat (75 %ige Lösung in Isododecan) und zum Spülen 1,15 g Wasser zugegeben und der Kessel innerhalb von 1 Stunde auf 70 °C aufgeheizt. Der Kesselinhalt wurde anschließend über 1 Stunde auf 85 °C erwärmt, und danach bei dieser Temperatur 1 Stunde gehalten. Es wurden 3,91 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,22 g Ascorbinsäure in 20,3 g Wasser zudosiert wurde.

Der Feststoffgehalt dieser Dispersion lag bei 37,8%, mit einer mittleren Teilchengröße von 2,737 µm (mittels Lichtstreuung bestimmt).

### Beispiel 4:

### Analyse des Freisetzungsverhaltens

Die fertigen Dispersionen aus den Beispielen 1 bis 3 wurden mit einem Rakel auf einen Karton aufgestrichen. Der Dufteindruck wurde vor und nach dem Reiben mit dem Finger sensorisch beurteilt (vgl. Bewertungsskala).

Definition der Bewertungsskala:

| Zahl | Bewertung |
|---|---|
| 1 | Sehr geringe Geruchswahmehmung |
| 2 | Deutliche Geruchswahmehmung |
| 3 | Starke Geruchswahmehmung |

Vor dem Reibeexperiment

| Beispiel | 1 Woche | 2 Wochen | 2 Monate |
|---|---|---|---|
| 1 | 2 | 1 | 1 |
| 2 | 2 | 1 | 1 |
| 3 | 1-2 | 1 | 1 |

Nach dem Reibeexperiment

| Beispiel | 1 Woche | 1 Monat | 2 Monate |
|---|---|---|---|
| 1 | 3 | 1-2 | 1 |
| 2 | 3 | 1-2 | 1 |
| 3 | 3 | 2 | 2 |

Es zeigt sich deutlich, dass das erfindungsgemäße Produkt bei längerer Lagerdauer eine verbesserte Duftfreisetzung aufweist.

Weitere Beispiele zur Verkapselung von Duft- und Riechstoffen:

### Beispiel 5:

In einen 2 I-Kessel mit Dispenserrührer (Durchmesser 5 cm) wurde folgendes Gemisch
aus Wasserphase

| | |
|---|---|
| 592 g | Wasser |
| 190 g | modifizierte Cellulose [Culminal MHPC 100 (5% in Wasser)] |
| 47,5 g | Polyvinylalkohol [Mowiol^{®} 15 / 79 (10% in Wasser)] |
| 2,1 g | NaNO₂ |

und Ölphase

| | |
|---|---|
| 55,0 g | Methylmethacrylat |
| 33 g | 1,4-Butandioldiacrylat |
| 11 g | Dimethylaminoethylmethacrylat |
| 11 g | Pentaerythrit-triacrylat |
| 1,7g | 2-Ethylthioglykonat |
| 110 g | Citral (CAS-Nr. 5392-40-5) |
| 330 g | Weißöl (CAS-Nr. 8042-47-5) |

gegeben (Gesamtmenge 1431,68 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 1,46 g tert-Butylperpivalat (75 %ige Lösung in Isododecan) und zum Spülen 1,26 g Wasser zugegeben und der Kessel innerhalb von 1 Stunde auf 70 °C aufgeheizt. Der Kesselinhalt wurde anschließend über 1 Stunde auf 85 °C erwärmt, und danach bei dieser Temperatur 1 Stunde gehalten. Anschließend wurden 5,38 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,14 g Ascorbinsäure in 20 g Wasser zudosiert wurde.

Die so hergestellte Dispersion wurde zur Stabilisierung mit 0,65g Acticide MBS und 0,72 Actizide MV versetzt. Zur Einstellung der Rheologie wurden 6,7 g eines Verdickers (Viscalex HV 30®) hinzugegeben und der pH-Wert durch Zugabe von Natronlauge (17%ig) auf pH=8 eingestellt.

Der Feststoffgehalt dieser Dispersion lag bei 37,6%, mit einer mittleren Teilchengröße von 5,567 µm (mittels Lichtstreuung bestimmt).

### Beispiel 6:

In einen 2 I-Kessel mit Dispenserrührer (Durchmesser 5 cm) wurde folgendes Gemisch
aus Wasserphase

| | |
|---|---|
| 592 g | Wasser |
| 190 g | modifizierte Cellulose [Culminal MHPC 100 (5% in Wasser)] |
| 47,5 g | Polyvinylalkohol [Mowiol^{®} 15 / 79 (10% in Wasser)] |
| 2,1 g | NaNO₂ |

und Ölphase

| | |
|---|---|
| 55,0 g | Methylmethacrylat |
| 33 g | 1,4-Butandioldiacrylat |
| 11 g | Dimethylaminoethylmethacrylat |
| 11 g | Pentaerythrit-triacrylat |
| 1,7g | 2-Ethylthioglykonat |
| 110 g | Duftstoffmischung für Wasch- und Reinigungsmittel |
| 330 g | Weißöl (CAS-Nr. 8042-47-5) |

gegeben (Gesamtmenge 1431,68 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 1,46 g tert-Butylperpivalat (75 %ige Lösung in Isododecan) und zum Spülen 1,26 g Wasser zugegeben und der Kessel innerhalb von 1 Stunde auf 70 °C aufgeheizt. Der Kesselinhalt wurde anschließend über 1 Stunde auf 85 °C erwärmt, und danach bei dieser Temperatur 1 Stunde gehalten. Anschließend wurden 5,38 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,3 g Ascorbinsäure in 28 g Wasser zudosiert wurde.

Die so hergestellte Dispersion wurde zur Stabilisierung mit 0,65g Acticide MBS und 0,72 Actizide MV versetzt. Zur Einstellung der Rheologie wurden 6,7 g eines Verdickers (Viscalex HV 30®) hinzugegeben und der pH-Wert durch Zugabe von Natronlauge (17%ig) auf pH=8 eingestellt.

Der Feststoffgehalt dieser Dispersion lag bei 36,8%, mit einer mittleren Teilchengröße von 5,448 µm (mittels Lichtstreuung bestimmt).

### Beispiel 7:

In einen 2 I-Kessel mit Dispenserrührer (Durchmesser 5 cm) wurde folgendes Gemisch
aus Wasserphase

| | |
|---|---|
| 216,62 g | Wasser |
| 95,15 g | modifizierte Cellulose [Culminal MHPC 100 (5% in Wasser)] |
| 23,65 g | Polyvinylalkohol [Mowiol^{®} 15 / 79 (10% in Wasser)] |
| 1,1 g | NaNO₂ |

und Ölphase

| | |
|---|---|
| 22,0 g | Methylmethacrylat |
| 16,5 g | 1,4-Butandioldiacrylat |
| 11 g | Methacrylsäure |
| 5,5 g | Pentaerythrit-triacrylat |
| 55 g | Duftstoffmischung für Wasch- und Reinigungsmittel |
| 165 g | Weißöl (CAS-Nr. 8042-47-5) |

gegeben (Gesamtmenge 629,14 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 0,73 g tert-Butylperpivalat (75 %ige Lösung in Isododecan) und zum Spülen 1 g Wasser zugegeben und der Kessel innerhalb von 1 Stunde auf 70 °C aufgeheizt. Der Kesselinhalt wurde anschließend über 1 Stunde auf 85 °C erwärmt, und danach bei dieser Temperatur 1 Stunde gehalten. Anschließend wurden 2,75 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,14 g Ascorbinsäure in 14 g Wasser zudosiert wurde.

Der Feststoffgehalt dieser Dispersion lag bei 41,1%, mit einer mittleren Teilchengröße von 2,264 µm (mittels Lichtstreuung bestimmt).

### Beispiel 8:

In einen 2 I-Kessel mit Dispenserrührer (Durchmesser 5 cm) wurde folgendes Gemisch
aus Wasserphase

| | |
|---|---|
| 427,12 g | Wasser |
| 138,4 g | modifizierte Cellulose [Culminal MHPC 100 (5% in Wasser)] |
| 34,4 g | Polyvinylalkohol [Mowiol^{®} 15 / 79 (10% in Wasser)] |
| 1,53 g | NaNO₂ |

und Ölphase

| | |
|---|---|
| 40,0 g | Methylmethacrylat |
| 24 g | 1,4-Butandioldiacrylat |
| 8 g | Diemthylaminomethylmethacrylat |
| 8 g | Pentaerythrit-triacrylat |
| 1,24 g | 2-Ethylhexylthioglykolat |
| 80 g | Duftstoffmischung für Wasch- und Reinigungsmittel |
| 240 g | Weißöl (CAS-Nr. 8042-47-5) |

gegeben (Gesamtmenge 1003g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 0,8 g tert.-Butylperneodecanoat und zum Spülen 1 g Wasser zugegeben und der Kessel innerhalb von 1 Stunde auf 50 °C aufgeheizt. Der Kesselinhalt wurde anschließend über 1 Stunde auf 70 °C erwärmt, und danach bei dieser Temperatur 1 Stunde gehalten. Anschließend wurden 3,91 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,22 g Ascorbinsäure in 25 g Wasser zudosiert wurde.

Der Feststoffgehalt dieser Dispersion lag bei 33,6%, mit einer mittleren Teilchengröße von 2,27 µm (mittels Lichtstreuung bestimmt).

### Beispiel 9:

In einen 2 I-Kessel mit Dispenserrührer (Durchmesser 5 cm) wurde folgendes Gemisch
aus Wasserphase

| | |
|---|---|
| 359,6 g | Wasser |
| 172,02 g | modifizierte Cellulose [Culminal MHPC 100 (5% in Wasser)] |
| 86,01 g | Polyvinylalkohol [Mowiol® 15 / 79 (10% in Wasser)] |
| 1,58 g | NaNO2 |

und Ölphase

| | |
|---|---|
| 40,51 g | Methylmethacrylat |
| 25,8 g | 1 ,4-Butandioldiacrylat |
| 8,6 g | Diemthylaminomethylmethacrylat |
| 8,6 g | Pentaerythrit-triacrylat |
| 1,33 | 2-Ethylhexylthioglykolat |
| 86,01 g | Duftstoffmischung für Wasch- und Reinigungsmittel |
| 258,02 g | C12-15 Benzoesäurealkylester (CAS 68411-27-8) |

gegeben (Gesamtmenge 1049 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 0,86 g tert.-Butylperneodecanoat und zum Spülen 1 g Wasser zugegeben und der Kessel innerhalb von 1 Stunde auf 50 °C aufgeheizt. Der Kesselinhalt wurde anschließend über 1 Stunde auf 70 °C erwärmt, und danach bei dieser Temperatur 1 Stunde gehalten. Anschließend wurden 4,3 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,23 g Ascorbinsäure in 21 g Wasser zudosiert wurde.

Der Feststoffgehalt dieser Dispersion lag bei 39,8%, mit einer mittleren Teilchengröße von 2,89 µm (mittels Lichtstreuung bestimmt).

### Beispiel 10:

In einen 2 I-Kessel mit Dispenserrührer (Durchmesser 5 cm) wurde folgendes Gemisch
aus Wasserphase

| | |
|---|---|
| 268,07 g | Wasser |
| 128 g | modifizierte Cellulose [Culminal MHPC 100 (5% in Wasser)] |
| 64 g | Polyvinylalkohol [Mowiol® 15 / 79 (10% in Wasser)] |
| 1,22 g | NaNO2 |

und Ölphase

| | |
|---|---|
| 30,14 g | Methylmethacrylat |
| 19,2 g | 1,4-Butandioldiacrylat |
| 6,4 g | Diemthylaminomethylmethacrylat |
| 6,4 g | Pentaerythrit-triacrylat |
| 0,99 | 2-Ethylhexylthioglykolat |
| 102,4 g | Duftstoffmischung für Wasch- und Reinigungsmittel |
| 153,6 g | C12-15 Benzoesäurealkylester (CAS 68411-27-8) |

gegeben (Gesamtmenge 780 g).

Die Mischung wurde 40 Minuten bei Raumtemperatur mit einer Drehzahl von 3500 UpM dispergiert und dann in einen mit einem Ankerrührer ausgestatteten 2 I-Kessel umgefüllt. Es wurden 1,28 g tert.-Butylperneodecanoat und zum Spülen 1 g Wasser zugegeben und der Kessel innerhalb von 1 Stunde auf 50 °C aufgeheizt. Der Kesselinhalt wurde anschließend über 1 Stunde auf 70 °C erwärmt, und danach bei dieser Temperatur 1 Stunde gehalten. Anschließend wurden 3,2 g einer 10%igen wässrigen Lösung von tert-Butylhydroperoxid zugegeben und der Kessel innerhalb von 90 Minuten auf 25 °C abgekühlt, wobei innerhalb der ersten 80 Minuten eine Lösung von 0,17 g Ascorbinsäure in 18,6 g Wasser zudosiert wurde.

Der Feststoffgehalt dieser Dispersion lag bei 37%, mit einer mittleren Teilchengröße von 2,18 µm (mittels Lichtstreuung bestimmt).

## Patentansprüche

1. Mikrokapsel, umfassend einen Kern a), der einen Duft- oder Riechstoff enthält, und eine Schale b), wobei b) erhältlich ist durch Polymerisation von
- einem oder mehreren C₁-C₂₄-Alkylester/n der Acryl- und/oder Methacrylsäure und
- mindestens zwei verschiedenen bi- oder polyfunktionellen Monomeren.

2. Mikrokapsel nach Anspruch 1, bei der unabhängig voneinander
- a) mindestens ein hydrophobes Material enthält,
- b) durch radikalische Polymerisation herstellbar ist,
- die Menge an C₁-C₂₄-Alkylester/n der Acryl- und/oder Methacrylsäure in der Mikrokapsel 1 bis 99,99 Massen% beträgt,
- ein C₁-C₁₆-Alkylester/n der Acryl- und/oder Methacrylsäure enthalten ist,
- die Menge der mindestens zwei verschiedenen bi- oder polyfunktionellen Monomeren in der Mikrokapsel 0,01 bis 70 Massen% beträgt,
- zwei, drei, vier oder fünf verschiendene Monomere mit radikalisch polymerisierbaren Gruppen enthält,
- die Menge an monofunktionellen vinylischen Monomeren, welche über zusätzliche nicht vinylische funktionelle Gruppen verfügen, in der Mikrokapsel 0 bis 50 Massen% beträgt,
und
- weitere monofunktionelle Monomere, welche über zusätzliche nicht vinylische funktionelle Gruppen verfügen, in einer Menge von 0 bis 40 Massen% in der Mikrokapsel enthalten sind.

3. Mikrokapsel nach Anspruch 1 oder 2, bei der unabhängig voneinander
- a) aus dem mindestens einen hydrophoben Material und dem mindestens einen Duft- oder Riechstoff besteht oder
a) aus dem mindestens einen Duft- oder Riechstoff besteht,
- b) durch radikalische Polymerisation hergestellt ist,
- die Menge an C₁-C₂₄-Alkylester/n der Acryl- und/oder Methacrylsäure In der Mikrokapsel 20 bis 80 Massen% beträgt,
- ein C₁-C₁₂-Alkylester/n der Acryl- und/oder Methacrylsäure enthalten ist,
- die Menge der mindestens zwei verschiedenen bi- oder polyfunktionellen Monomeren in der Mikrokapsel 5 bis 50 Massen% beträgt.
- zwei oder drei verschiendene Monomere mit zwei - oder mehrfach ungesättigten und radikalisch polymerisierbaren Gruppen enthält,
- die Menge an monofunktionellen vinylischen Monomeren, welche über zusätzliche nicht vinylische funktionelle Gruppen verfügen, in der Mikrokapsel 10 bis 40 Massen% beträgt,
und
- weitere monofunktionelle Monomere, welche über zusätzliche nicht vinylische funktionelle Gruppen verfügen, in einer Menge von 5 bis 35 Massen% in der Mikrokapsel enthalten sind.

4. Mikrokapsel nach einem der Ansprüche 2 bis 3, bei der unabhängig voneinander
- das mindestens eine hydrophobe Material ausgewählt ist aus der Gruppe bestehend aus: Pflanzenöl, tierischem Öl, niederviskosen hydrophoben Materialien und Mineralöl,
- der mindestens eine Duft- oder Riechstoff ausgewählt ist aus der Gruppe bestehend aus: natürlichen Duft- oder Riechstoffen, synthetischen Duft oder Riechstoffen und halbsynthetischen Duft- oder Riechstoffen,
- die Menge an C₁-C₂₄-Alkylester/n der Acryl- und/oder Methacrylsäure in der Mikrokapsel 40 bis 60 Massen% beträgt,
- ein C₁-C₆-Aikytester/n der Acryl- und/oder Methacrylsäure enthalten ist,
- die Menge der mindestens zwei verschiedenen bi- oder polyfunktionellen Monomeren in der Mikrokapsel 20 bis 40 Massen% beträgt,
- zwei verschiedene Monomere mit zwei - oder mehrfach ungesättigten und radikalisch polymerisierbaren Gruppen enthält,
- die Menge an monofunktionellen vinylischen Monomeren, welche über zusätzliche nicht vinylische funktionelle Gruppen verfügen, in der Mikrokapsel 20 bis 30 Massen% beträgt,
und
- weitere monofunktionelle Monomere, welche über zusätzliche nicht vinylische funktionelle Gruppen verfügen, in einer Menge von 10 bis 30 Massen% in der Mikrokapsel enthalten sind.

5. Mikrokapsel nach einem der Ansprüche 1 bis 4, bei der der mittlere Durchmesser im Bereich von 0,8 bis 100 µm liegt.

6. Mikrokapsel nach einem der Ansprüche 1 bis 5, bei der das Verhältnis der Dicke der Schale zum Durchmesser der Mikrokapsel im Bereich von 0,005 bis 0,1 liegt.

7. Chemische Zusammensetzung enthaltend Mikrokapseln gemäß einem der Ansprüche 1 bis 6.

8. Chemische Zusammensetzung nach Anspruch 7, die mindestens einen Stoff enthält, der ausgewählt ist aus der Gruppe bestehend aus Tensid, Desinfektionsmittel, Farbstoff, Säure, Base, Komplexbildner, Biozid, Hydrotrop, Verdickungsmittel, Builder, Cobuilder, Enzym, Bleichmittel, Bleichaktivator, Korrosionsinhibitoren, Bleichkatalysatoren, Farbschutzadditive, Farbübertragungsinhibitoren, Vergrauungsinhibitoren, Soil-Release-Polymere, Faserschutzadditive, Silicone, Bakterizide und Konservierungsmittel, organische Lösemittel, Löslichkeitsvermittter, Auflösungsverbesserer und Parfüm.

9. Verwendung von Mikrokapseln gemäß einem der Ansprüche 1 bis 6 zur Herstellung einer Zusammensetzung gemäß einem der Ansprüche 7 bis 8.

10. Verwendung von Mikrokapseln gemäß einem der Ansprüche 1 bis 6 zur Behandlung von Oberflächen.

11. Verwendung von Mikrokapseln gemäß einem der Ansprüche 1 bis 6 in der Textilwäsche.

12. Verwendung einer chemischen Zusammensetzung gemäß einem der Ansprüche 7 bis 8 in der Textilwäsche.

13. Gegenstand, der Mikrokapseln gemäß einem der Ansprüche 1 bis 6 aufweist

14. Gegenstand nach Anspruch 13, der die Mikrokapseln auf seiner Oberfläche aufweist.

## Claims

1. A microcapsule comprising a core a), which comprises a scent or fragrance, and a shell b), where b) is obtainable by polymerization of
- one or more C₁-C₂₄-alkyl ester(s) of acrylic acid and/or methacrylic acid and
- at least two different bi- or polyfunctional monomers.

2. The microcapsule according to claim 1, in which, independently of one another,
- a) comprises at least one hydrophobic material,
- b) can be prepared by free-radical polymerization,
- the amount of C₁-C₂₄-alkyl ester(s) of acrylic acid and/or methacrylic acid in the microcapsule is 1 to 99.99% by mass,
- a C₁-C₁₈-alkyl ester(s) of acrylic acid and/or methacrylic acid is present,
- the amount of the at least two different bi- or polyfunctional monomers in the microcapsule is 0.01 to 70% by mass,
- two, three, four or five different monomers with free-radically polymerizable groups are present,
- the amount of monofunctional vinylic monomers which have additional nonvinylic functional groups in the microcapsule is 0 to 50% by mass, and
- further monofunctional monomers which have additional nonvinylic functional groups are present in an amount of from 0 to 40% by mass in the microcapsule.

3. The microcapsule according to claim 1 or 2, in which, independently of one another,
- a) consists of the at least one hydrophobic material and the at least one scent or fragrance or
a) consists of the at least one scent or fragrance,
- b) is prepared by free-radical polymerization,
- the amount of C₁-C₂₄-alkyl ester(s) of acrylic acid and/or methacrylic acid in the microcapsule is 20 to 80% by mass,
- a C₁-C₁₂-alkyl ester(s) of acrylic acid and/or methacrylic acid is present,
- the amount of the at least two different bi- or polyfunctional monomers in the microcapsule is 5 to 50% by mass,
- two or three different monomers with di- or polyunsaturated and free-radically polymerizable groups are present,
- the amount of monofunctional vinylic monomers which have additional nonvinylic functional groups in the microcapsule is 10 to 40% by mass, and
- further monofunctional monomers which have additional nonvinylic functional groups are present in the microcapsule in an amount of from 5 to 35% by mass.

4. The microcapsule according to any one of claims 2 to 3, in which, independently of one another,
- the at least one hydrophobic material is selected from the group consisting of: vegetable oil, animal oil, low-viscosity hydrophobic materials and mineral oil,
- the at least one scent or fragrance is selected from the group consisting of: natural scents or fragrances, synthetic scents or fragrances and semisynthetic scents or fragrances,
- the amount of C₁-C₂₄-alkyl ester(s) of acrylic acid and/or methacrylic acid in the microcapsule is 40 to 60% by mass,
- a C₁-C₆ alkyl ester(s) of acrylic acid and/or methacrylic acid is present,
- the amount of the at least two different bi-or polyfunctional monomers in the microcapsule is 20 to 40% by mass,
- two different monomers with di- or polyunsaturated and free-radically polymerizable groups are present,
- the amount of monofunctional vinylic monomers which have additional nonvinylic functional groups in the microcapsule is 20 to 30% by mass, and
- further monofunctional monomers which have additional nonvinylic functional groups are present in the microcapsule in an amount of from 10 to 30% by mass.

5. The microcapsule according to any one of claims 1 to 4, in which the average diameter is in the range from 0.8 to 100 µm.

6. The microcapsule according to any one of claims 1 to 5, in which the ratio of the thickness of the shell to the diameter of the microcapsule is in the range from 0.005 to 0.1.

7. A chemical composition comprising microcapsules according to any one of claims 1 to 6.

8. The chemical composition according to claim 7, which comprises at least one substance which is selected from the group consisting of surfactant, disinfectant, dye, acid, base, complexing agent, biocide, hydrotrope, thickener, builder, cobuilder, enzyme, bleach, bleach activator, corrosion inhibitors, bleach catalysts, color protection additives, color transfer inhibitors, graying inhibitors, soil release polymers, fiber protection additives, silicones, bactericides and preservatives, organic solvents, solubility promoters, dissolution improvers and perfume.

9. The use of microcapsules according to any one of claims to 6 for producing a composition according to any one of claims 7 to 8.

10. The use of microcapsules according to any one of claims 1 to 6 for treating surfaces.

11. The use of microcapsule according to any one of claims 1 to 6 in the washing of textiles.

12. The use of a chemical composition according to any one of claims 7 to 8 in the washing of textiles.

13. An article which has microcapsules according to any one of claims 1 to 6.

14. The article according to claim 13, which has the microcapsules on its surface.

## Revendications

1. Microcapsule, comprenant un noyau a) qui contient un parfum ou une substance odorante, et une enveloppe b), b) pouvant être obtenue par polymérisation
- d'un ou plusieurs ester(s) alkylique(s) en C₁-C₂₄ de l'acide acrylique et/ou de l'acide méthacrylique et
- d'au moins deux différents monomères bi- ou polyfonctionnels.

2. Microcapsule selon la revendication 1, dans laquelle, indépendamment les uns des autres
- a) contient au moins une matière hydrophobe,
- b) peut être produite par polymérisation radicalaire,
- la quantité d'esters(s) alkylique(s) en C₁-C₂₄ de l'acide acrylique et/ou de l'acide méthacrylique dans la microcapsule vaut de 1 à 99,99 % en masse,
- un/des ester(s) alkylique(s) en C₁-C₁₈ de l'acide acrylique et/ou de l'acide méthacrylique est/sont contenu(s),
- la quantité desdits au moins deux différents monomères bi- ou polyfonctionnels dans la microcapsule vaut de 0,01 à 70 % en masse,
- deux, trois, quatre ou cinq différents monomères comportant des groups polymerisables sont contenus,
- la quantité de monomères vinyliques monofonctionnels, qui sont dotés de groupes fonctionnels non vinyliques supplémentaires, dans la microcapsule, vaut de 0 à 50 % en masse,
et
- d'autres monomères monofonctionnels, qui sont dotés de groupes fonctionnels non vinyliques supplémentaires, sont contenus en une quantité de 0 à 40 % en masse dans la microcapsule.

3. Microcapsule selon la revendication 1 ou 2, dans laquelle, indépendamment les uns des autres
- a) consiste en ladite au moins une matière hydrophobe et ledit au moins un parfum ou ladite au moins une substance odorante ou
a) consiste en ledit au moins un parfum ou ladite au moins une substance odorante,
- b) est produite par polymérisation radicalaire,
- la quantité d'esters (s) alkylique (s) en C₁-C₂₄ de l'acide acrylique et/ou de l'acide méthacrylique dans la microcapsule vaut de 20 à 80 % en masse,
- un/des ester(s) alkylique(s) en C₁-C₁₂ de l'acide acrylique et/ou, de l'acide méthacrylique est/sont contenu (s),
- la quantité desdits au moins deux différents monomères bi- ou polyfonctionnels dans la microcapsule vaut de 5 à 50 % en masse,
- deux ou trois différents monomères comportant des groupes deux ou plus de deux fois insaturés et polymérisable par voie radicalaire sont contenus,
- la quantité de monomères vinyliques monofonctionnels, qui sont dotés de groupes fonctionnels non vinyliques supplémentaires, dans la microcapsule, vaut de 10 à 40 % en masse,
et
- d'autres monomères monofonctionnels, qui sont dotés de groupes fonctionnels non vinyliques supplémentaires, sont contenus en une quantité de 5 à 35 % en masse dans la microcapsule.

4. Microcapsule selon la revendication 2 ou 3, dans laquelle, indépendamment les uns des autres
- ladite au moins une matière hydrophobe est choisie dans le groupe constitué par : une huile végétale, une huile animale, des matières hydrophobes peu visqueuses et une huile minérale,
- ledit au moins un parfum ou ladite au moins une substance odorante est choisi(e) dans le groupe constitué par : des parfums naturels ou des substances odorantes naturelles, des parfums ou matières odorantes synthétiques et des parfums ou matières odorantes semi-synthétiques,
- la quantité d'ester(s) alkylique(s) en C₁-C₂₄ de l'acide acrylique et/ou de l'acide méthacrylique dans la microcapsule vaut de 40 à 60% en masse,
- un/des ester(s) alkylique(s) en C₁-C₆ de l'acide acrylique et/ou de l'acide méthacrylique est/sont contenu(s),
- la quantité desdits au moins deux différents monomères bi- ou polyfonctionnels dans la microcapsule vaut de 20 à 40 % en masse,
- deux différents monomères comportant des groupes deux ou plus de deux fois insaturés et polymérisables par voie radicalaire sont contenus,
- la quantité de monomères vinyliques monofonctionnels, qui sont dotés de groupes fonctionnels non vinyliques supplémentaires, dans la microcapsules, vaut de 20 à 30 % en masse,
et
- d'autres monomères monofonctionnels, qui sont dotés de groupes fonctionnels non vinyliques supplémentaires, sont contenus en une quantité de 10 à 30 % en masse dans la microcapsule.

5. Microcapsule selon l'une quelconque des revendications 1 à 4, dans laquelle le diamètre moyen se situe dans la plage allant de 0,8 à 100 µm.

6. Microcapsule selon l'une quelconque des revendications 1 à 5, dans laquelle le rapport de l'épaisseur de l'enveloppe au diamètre de la microcapsule se situe dans la plage allant de 0,005 à 0,1.

7. Composition chimique contenant des microcapsules selon l'une quelconque des revendications 1 à 6.

8. Composition chimique selon la revendication 7, qui contient au moins une substance qui est choisie dans le groupe constitué par un agent tensioactif, un désinfectant, un colorant, un acide, une base, un complexant, un biocide, un agent hydrotrope, un épaississant, un adjuvant actif de détergence, un co-adjuvant actif de détergence, une enzyme, un agent de blanchiment, un activateur de blanchiment, des agents anticorrosion, des catalyseurs de blanchiment, des additifs protecteurs des couleurs, des inhibiteurs de transfert de couleurs, des agents antiredéposition, des polymères soil-release, des additifs protecteurs des fibres, des silicones, des bactéricides et des conservateurs, des solvants organiques, des tiers-solvants, des agents améliorant la dissolution et un parfum.

9. Utilisation de microcapsules selon l'une quelconque des revendications 1 à 6, pour la préparation d'une composition selon la revendication 7 ou 8.

10. Utilisation der microcapsules selon l'une quelconque des revendications 1 à 6, pour le traitement de surfaces.

11. Utilisation de microcapsules selon l'une quelconque des revendications 1 à 6, dans le lavage de textiles.

12. Utilisation d'une composition chimique selon la revendication 7 ou 8, dans le lavage de textiles.

13. Article qui comporte des microcapsules selon l'une quelconque des revendications 1 à 6.

14. Article selon la revendication 13, qui comporte les microcapsules sur sa surface.
